# EUROPÄISCHE PATENTSCHRIFT

(11) **EP 3 109 509 B1**
(45) Veröffentlichungstag und Bekanntmachung des Hinweises auf die Patenterteilung: **25.09.2019**
(21) Anmeldenummer: 16175537.6
(22) Anmeldetag: 21.06.2016
(51) Int. Cl.: F16H 3/00, F16H 37/08, F16H 3/08

(54) **GETRIEBEANORDNUNG**
GEARBOX ASSEMBLY
SYSTÈME D'ENGRENAGE

(30) Priorität: 25.06.2015 DE 102015211809
(43) Veröffentlichungstag der Anmeldung: 28.12.2016
(73) Patentinhaber: Deere & Company, Moline, IL 61265 (US)
(72) Erfinder: Raisch, Stefan, 71665 Vaihingen/Enz (DE)
(74) Vertreter: Reichert, Christian

(56) Entgegenhaltungen:
- EP-A1- 1 367 296
- DE-A1-102006 054 281
- DE-A1-102006 058 831
- DE-A1-102012 221 881

## Beschreibung

Die Erfindung betrifft eine Getriebeanordnung für einen Antriebsstrang eines Fahrzeugs, um einen Antriebsmotor mit einem Fahrantrieb des Fahrzeugs zu verbinden, umfassend ein Hauptschaltgetriebe mit mehreren Übersetzungsstufen, wobei durch ein bedarfsweises Schalten mittels Schaltstellen einer oder mehrerer Übersetzungsstufen mehrere Schaltzustände des Hauptschaltgetriebes schaltbar sind, ein Umlaufgetriebe, wobei das Hauptschaltgetriebe und das Umlaufgetriebe über zwei Anschlusswellen antriebsmäßig miteinander verbunden oder bedarfsweise verbindbar sind, wobei in einem oder mehreren Schaltzuständen des Hauptschaltgetriebes ein Leistungsfluss von dem Antriebsmotor in mindestens einem Abschnitt der Getriebeanordnung über mehrere verzweigte Leistungspfade zu dem Fahrantrieb verläuft.

Eine derartige Anordnung zeigt die EP 1 367 296 A1, die in erster Linie für den Antriebsstrang eines Personenkraftwagens oder eines leichten Nutzfahrzeugs geeignet ist.

In größeren und schweren Nutzfahrzeugen, wie beispielsweise Traktoren, ist es allerdings entscheidend, dass Getriebeanordnungen derart ausgelegt sind, dass eine große Spreizung bei gleichzeitig geringer zu synchronisierender Massenträgheit gewährleistet ist. Eine hohe Spreizung bedingt, dass die unteren Gänge eine hohe Übersetzung haben müssen. Außerdem steht die Forderung nach einer geringen zu synchronisierenden Massenträgheit in konstruktiver Hinsicht in einem Spannungsverhältnis zu möglichst geringen Drehzahlen der rotierenden Komponenten der Getriebeanordnung. Es besteht folglich die Aufgabe darin, eine Getriebeanordnung bereitzustellen, die diesen Anforderungen zumindest teilweise gerecht wird.

DE 102012221881A1 beschreibt eine Antriebseinheit und ein Parallelschaltgetriebe mit zwei jeweils mehrere schaltbare Gänge enthaltenden Teilgetrieben mit jeweils einer Getriebeeingangswelle. Zwischen vorhandenen Reibkupplungen ist ein mittels einer Sperrkupplung schaltbares Summierungsgetriebe angeordnet.

Die Aufgabe wird gelöst durch eine Getriebeanordnung für einen Antriebsstrang eines Fahrzeugs, um einen Antriebsmotor mit einem Fahrantrieb des Fahrzeugs zu verbinden, umfassend ein Hauptschaltgetriebe mit mehreren Übersetzungsstufen, wobei durch ein bedarfsweises Schalten mittels Schaltstellen einer oder mehrerer Übersetzungsstufen mehrere Schaltzustände des Hauptschaltgetriebes schaltbar sind, wobei die Schaltstellen als formschlüssige Schaltstellen ausgeführt sind, ein Umlaufgetriebe, wobei das Hauptschaltgetriebe und das Umlaufgetriebe über zwei Anschlusswellen antriebsmäßig miteinander verbunden oder bedarfsweise verbindbar sind, wobei in einem oder mehreren Schaltzuständen des Hauptschaltgetriebes ein Leistungsfluss von dem Antriebsmotor in mindestens einem Abschnitt der Getriebeanordnung über mehrere verzweigte Leistungspfade zu dem Fahrantrieb verläuft, wobei in mindestens einem Schaltzustand der Leistungsfluss in mindestens einem der verzweigten Leistungspfade über mindestens zwei Schaltstellen verläuft und in einem oder mehreren Schaltzuständen der Leistungsfluss in mindestens einem der verzweigten Leistungspfade von einer der Anschlusswellen (52₁, 52₂) auf die andere der Anschlusswellen (52₂, 52₁) verläuft.

Durch die erfindungsgemäße Getriebeanordnung kann eine große Übersetzung der unteren Gänge bei gleichzeitig nicht zu großen Drehzahlen und Massenträgheiten der rotierenden Komponenten dargestellt werden, so dass kurze Schaltzeiten beim Wechsel zwischen den Gängen erreicht werden. Weiterhin ist es von Vorteil mindestens zwei Schaltstellen im Leistungsfluss vorzusehen, da hierdurch über eine Windung des Kraftflusses durch die Getriebeanordnung weitere Gänge beziehungsweise Übersetzungsstufen erzeugt werden können. Weiterhin können mittels der zweiten Schaltstelle auch Gruppengänge innerhalb eines Teilgetriebes des Hauptschaltgetriebes erzeugt werden. Schließlich wird ein Getriebe mit einem guten Wirkungsgrad bereitgestellt.

Ein guter Wirkungsgrad und ein geringer Verschleiß sind gewährleistet. Außerdem ist diese Anordnung kostengünstiger und kleiner und es ist keine Halteenergie notwendig, das heißt es ist nur Energie zum Schalten notwendig und nicht um den eingeschalteten Zustand zu halten.

Es wird zumindest ein sogenannter Windungsgang bereitgestellt. Hierbei ist insbesondere bevorzugt, dass der Leistungsfluss von einer der Anschlusswellen über mindestens eine Übersetzungsstufe auf die andere der Anschlusswellen verläuft.

Bevorzugt umfasst das Umlaufgetriebe vier Anschlussschnittstellen, von denen die erste und die zweite Anschlussschnittstelle über jeweils eine Schaltstelle mit einer Anschlusswelle der Getriebeanordnung nach Extern verbindbar sind und die dritte Anschlussschnittstelle mit einer der beiden Anschlusswellen des Hauptschaltgetriebes und die vierte Anschlussschnittstelle mit der anderen der beiden Anschlusswelle des Hauptschaltgetriebes verbunden oder bedarfsweise verbindbar ist. Hierbei bedeutet "nach Extern verbindbar", dass aus Sicht der Getriebeanordnung entweder eine Verbindung zu dem Antriebsmotor oder zu dem nachgeordneten Fahrantrieb besteht.

In einer bevorzugten Ausgestaltung ist die dritte Anschlussschnittstelle über eine Schaltstelle mit einer der beiden Anschlusswellen des Hauptschaltgetriebes und die vierte Anschlussschnittstelle über eine Schaltstelle mit der anderen der beiden Anschlusswellen des Hauptschaltgetriebes verbindbar. Hierdurch wird ein voll lastschaltbares Getriebe bereitgestellt.

Bevorzugt ist das Hauptschaltgetriebe als Parallelschaltgetriebe ausgeführt. Hier ist insbesondere bevorzugt, dass das Hauptschaltgetriebe in Vorgelegebauweise mit zwei Vorgelegewellen ausgeführt ist.

Die erfindungsgemäße Getriebeanordnung wird anhand der nachfolgenden Figuren beschrieben. Hierin zeigen
- Figur 1: ein landwirtschaftliches Arbeitsfahrzeug mit einem Antriebsstrang, der eine erfindungsgemäßen Getriebeanordnung umfasst;
- Figur 2: ein Blockschaltbild einer erfindungsgemäßen Getriebeanordnung in einer ersten Ausführungsform;
- Figur 3: ein Blockschaltbild einer erfindungsgemäßen Getriebeanordnung in einer zweiten Ausführungsform;
- Figur 4: ein Blockschaltbild einer erfindungsgemäßen Getriebeanordnung in einer dritten Ausführungsform;
- Figur 5: ein Blockschaltbild einer erfindungsgemäßen Getriebeanordnung in einer vierten Ausführungsform;
- Figur 6: ein Radsatzlayout der ersten Ausführungsform der Getriebeanordnung;
- Figur 7: eine Schaltmatrix der ersten, zweiten und dritten Ausführungsform der Getriebeanordnung;
- Figur 8: eine Schaltmatrix der vierten Ausführungsform der Getriebeanordnung;
- Figur 9: einen in das Radsatzlayout der ersten Ausführungsform der Getriebeanordnung eingezeichneten Leistungsfluss;
- Figur 10: einen in das Radsatzlayout der ersten Ausführungsform der Getriebeanordnung eingezeichneten Leistungsfluss;
- Figur 11: ein Blockschaltbild einer erfindungsgemäßen Getriebeanordnung in einer fünften Ausführungsform;
- Figur 12: ein Radsatzlayout der fünften Ausführungsform der Getriebeanordnung;
- Figur 13: eine Schaltmatrix der fünften Ausführungsform der Getriebeanordnung;
- Figur 14: einen in das Radsatzlayout der fünften Ausführungsform der Getriebeanordnung eingezeichneten Leistungsfluss; und
- Figur 15: einen in das Radsatzlayout der fünften Ausführungsform der Getriebeanordnung eingezeichneten Leistungsfluss.

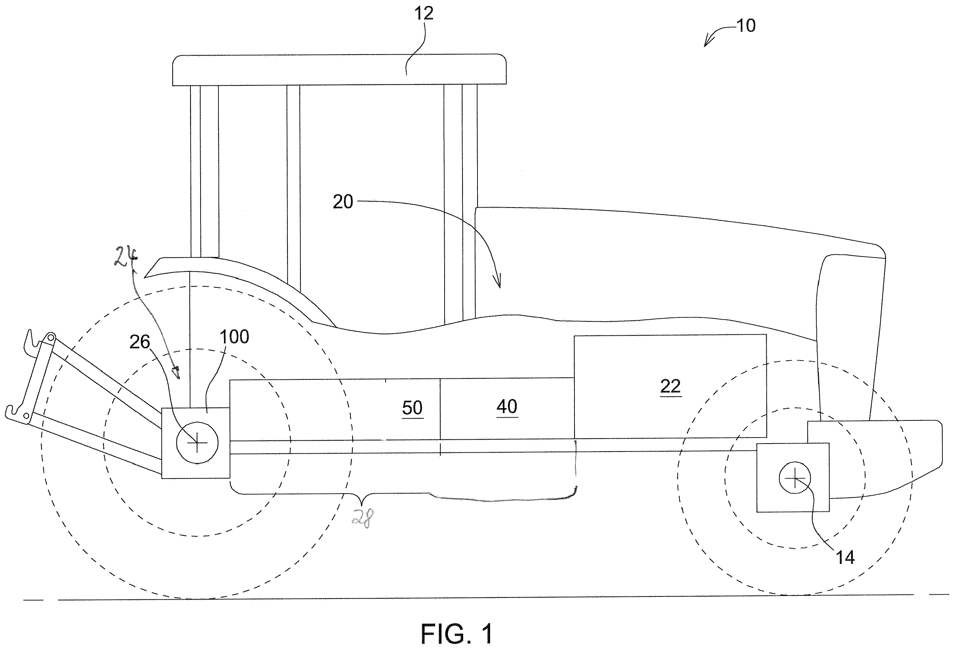

Die Figur 1 zeigt ein Fahrzeug 10 in Gestalt eines Traktors mit einer Kabine 12 und einem Antriebsstrang 20 in einer möglichen Ausgestaltung. Der Antriebsstrang 20 umfasst einen Antriebsmotor 22, der als Verbrennungskraftmaschine ausgeführt sein kann, eine Getriebeanordnung 28 und einen Fahrantrieb 24. Der Fahrantrieb 24 umfasst seinerseits ein Achsgetriebe 100 und eine permanent angetriebene Fahrzeugachse, welche beispielsweise eine hintere Fahrzeugachse 26 sein kann. Zusätzlich kann der Fahrantrieb 24 eine bedarfsweise angetriebene vordere Fahrzeugachse 14 umfassen.

Die Getriebeanordnung 28 umfasst in einer einfachen Ausgestaltung ein Umlaufgetriebe 40 und ein Hauptschaltgetriebe 50, welches als Parallelschaltgetriebe oder Doppelkupplungsgetriebe ausgebildet sein kann. Hierbei kann aus Sicht eines Leistungsflusses von dem Antriebsmotor 22 zu dem Fahrantrieb 24 das Umlaufgetriebe 40 vor oder hinter dem Hauptschaltgetriebe 50 angeordnet sein. Weiterhin kann die Getriebeanordnung 28 ein nicht dargestelltes Wendegetriebe, auch Reversiereinheit genannt, umfassen. Auf eine Darstellung des Abtriebs des bedarfsweise zuschaltbaren Vorderradantriebs aus der Getriebeanordnung 28 wurde verzichtet.

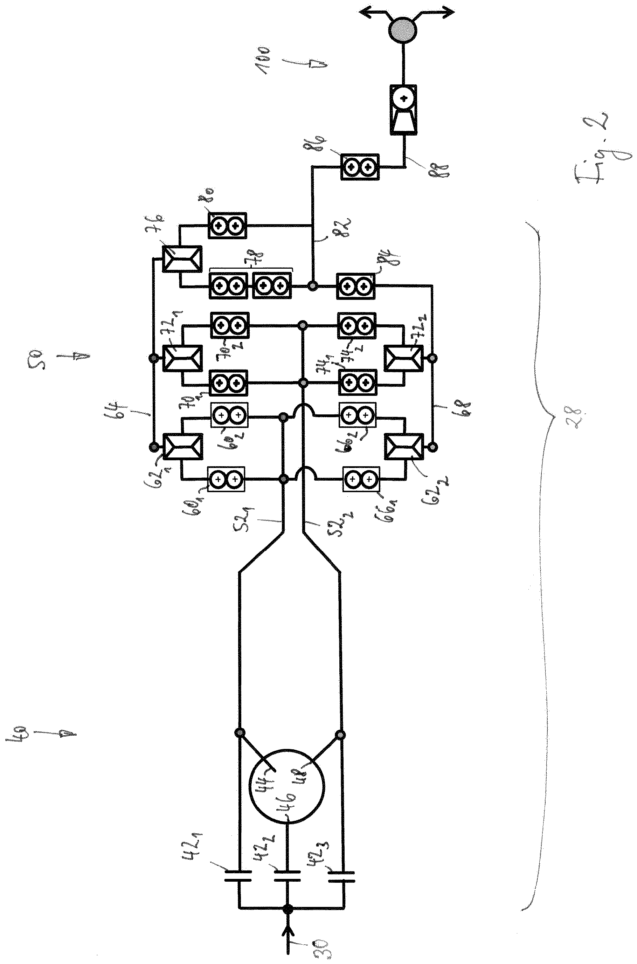

Die Figur 2 zeigt ein Blockschaltbild einer erfindungsgemäßen Getriebeanordnung 28 in einer ersten Ausführungsform. Die Getriebeanordnung umfasst ein Hauptschaltgetriebe in Form eines Parallelschaltgetriebes 50 und ein Umlaufgetriebe 40. Das Parallelschaltgetriebe 50 kann, wie vorliegend dargestellt, in Vorgelegebauweise ausgeführt sein.

Das Umlaufgetriebe 40 weist eine durch den in Figur 1 dargestellten Antriebsmotor 22 angetriebene Eingangswelle 30 auf, von der ausgehend ein Leistungsfluss auf bedarfsweise schaltbare Schaltelemente 42₁, 42₂, 42₃ übertragbar ist. Über das Schaltelement 42₁ ist der Leistungsfluss auf eine Differenzwelle 44 - welche als Planetenradträger ausgeführt sein kann - des Umlaufgetriebes 40 und eine erste Anschlusswelle 52₁ des Hauptschaltgetriebes 50 übertragbar. Über das Schaltelement 42₂ ist der Leistungsfluss auf eine Summenwelle 46 - welche als Hohlrad ausgeführt sein kann - des Umlaufgetriebes 40 übertragbar. Über das Schaltelement 42₃ ist der Leistungsfluss auf eine Differenzwelle 48 - welche als Sonnenrad ausgeführt sein kann - des Umlaufgetriebes 40 und eine zweite Anschlusswelle 52₂ des Hauptschaltgetriebes 50 übertragbar.

Ausgehend von der ersten Anschlusswelle 52₁ kann der Leistungsfluss über zwei Stirnradstufen 60₁, 60₂ an eine Schaltstelle 62₁ verteilt werden, wobei die Schaltstelle 62₁ ihrerseits eine Vorgelegewelle 64 in eine Antriebsverbindung mit den Stirnradstufen 60₁, 60₂ bringen kann. Zudem kann ausgehend von der ersten Anschlusswelle 52₁ der Leistungsfluss über weitere zwei Stirnradstufen 66₁, 66₂ an eine Schaltstelle 62₂ verteilt werden, wobei die Schaltstelle 62₂ ihrerseits eine Vorgelegewelle 68 in eine Antriebsverbindung mit den Stirnradstufen 66₁, 66₂ bringen kann.

Weiterhin kann von der zweiten Anschlusswelle 52₂ der Leistungsfluss über zwei Stirnradstufen 70₁, 70₂ an eine Schaltstelle 72₁ verteilt werden, wobei die Schaltstelle 72₁ ihrerseits eine Vorgelegewelle 68 in eine Antriebsverbindung mit den Stirnradstufen 70₁, 70₂ bringen kann. Zudem kann ausgehend von der zweiten Anschlusswelle 52₂ der Leistungsfluss über weitere zwei Stirnradstufen 74₁, 74₂ an eine Schaltstelle 72₂ verteilt werden, wobei die Schaltstelle 72₂ ihrerseits eine Vorgelegewelle 68 in eine Antriebsverbindung mit den Stirnradstufen 66₁, 66₂ bringen kann.

Ausgehend von der Vorgelegewelle 64 kann der Leistungsfluss über eine Schaltstelle 76 entweder über eine Doppelstirnradstufe 78 oder eine Stirnradstufe 80 auf eine Ausgangswelle 82 des Hauptschaltgetriebes 50 übertragen werden. Die Doppelstirnradstufe 78 erzeugt eine Drehrichtungsumkehr und dient in Verbindung mit den über die Vorgelegewelle 64 abgetriebenen Übersetzungsstufen der Darstellung von Rückwärtsgängen. Ausgehend von der Vorgelegewelle 68 kann der Leistungsfluss über eine Stirnradstufe 84 auf die Ausgangswelle 82 des Hauptschaltgetriebes 50 übertragen werden. Von der Ausgangswelle 82 wird der Leistungsfluss über eine weitere Stirnradstufe 86 auf eine Abtriebswelle 88 und weiter auf das Achsgetriebe 100 übertragen.

Die in der Figur 2 gezeigte Ausführungsform des Hauptschaltgetriebes weist acht Übersetzungsstufen auf, wobei die geraden Gänge 2, 4, 6, 8 ihren Leistungsfluss über die erste Anschlusswelle 52₁ erhalten und entsprechend die ungeraden Gänge 1, 3, 5, 7 ihren Leistungsfluss über die zweite Anschlusswelle 52₂ erhalten. Alternativ kann das Hauptschaltgetriebe 50 aber auch eine von acht abweichende Anzahl von Übersetzungsstufen haben, beispielsweise zehn oder zwölf Übersetzungsstufen. Auch eine ungerade Gesamtanzahl von Gängen kann möglich sein.

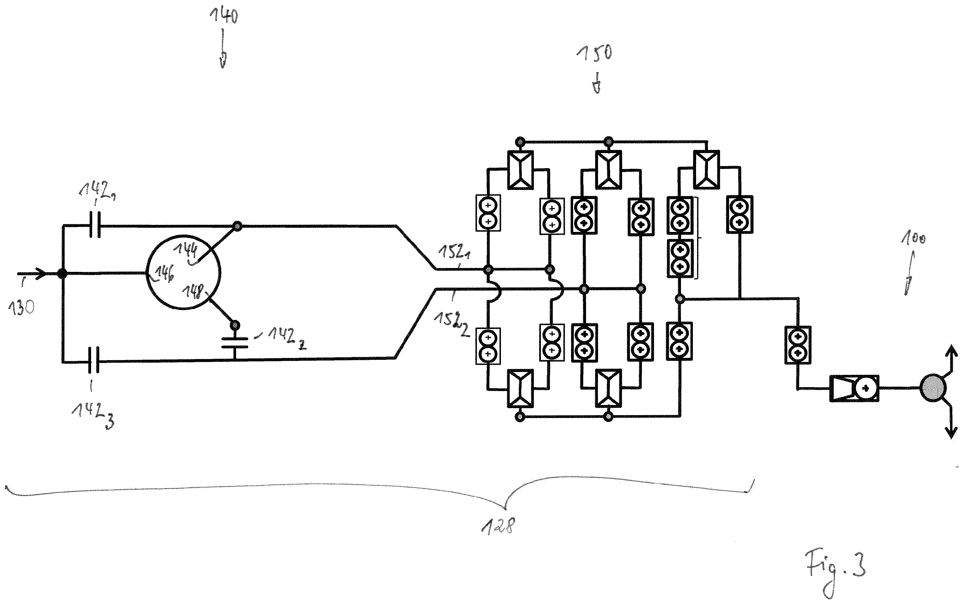

Die Figur 3 zeigt ein Blockschaltbild einer weiteren Ausführung der Getriebeanordnung, wobei nur die Abweichungen gegenüber der in der Figur 2 gezeigten Ausführung beschrieben werden und die Bezugszeichen um den Zähler 100 hochgesetzt sind. Ausgehend von der Eingangswelle 130 wird der Leistungsfluss unmittelbar auf die Summenwelle 146 - welche als Hohlrad ausgeführt sein kann - übertragen. Über das Schaltelement 142₁ ist der Leistungsfluss auf die Differenzwelle 144 - die als Planetenradträger ausgebildet sein kann - des Umlaufgetriebes 140 und die erste Anschlusswelle 152₁ des Hauptschaltgetriebes 150 übertragbar. Über das Schaltelement 142₃ ist der Leistungsfluss auf die Differenzwelle 148 - welche als Sonnenrad ausgebildet sein kann - des Umlaufgetriebes 140 und die zweite Anschlusswelle 152₂ des Hauptschaltgetriebes 150 übertragbar. Über die Differenzwelle 148 ist der Leistungsfluss über das Schaltelement 142₂ auf die zweite Anschlusswelle 152₂ übertragbar.

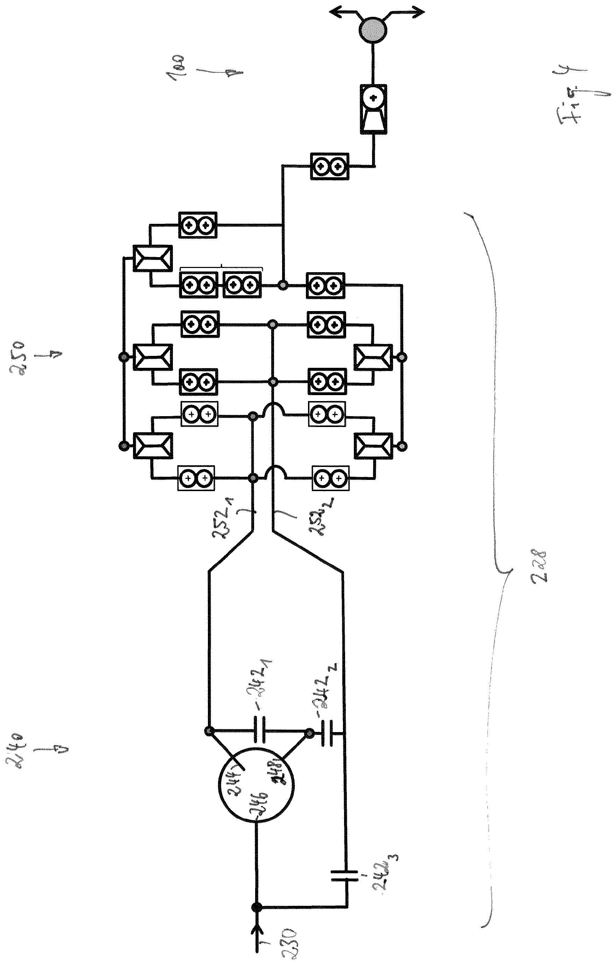

Die Figur 4 zeigt ein Blockschaltbild einer weiteren Ausführung der Getriebeanordnung, wobei nur die Abweichungen gegenüber der in der Figur 3 gezeigten Ausführung beschrieben werden und die Bezugszeichen ein weiteres Mal um den Zähler 100 hochgesetzt sind. Die Schaltstelle 242₁ ist vorliegend zwischen der Differenzwelle 248 und der Differenzwelle 244 des Umlaufgetriebes 240 angeordnet ist.

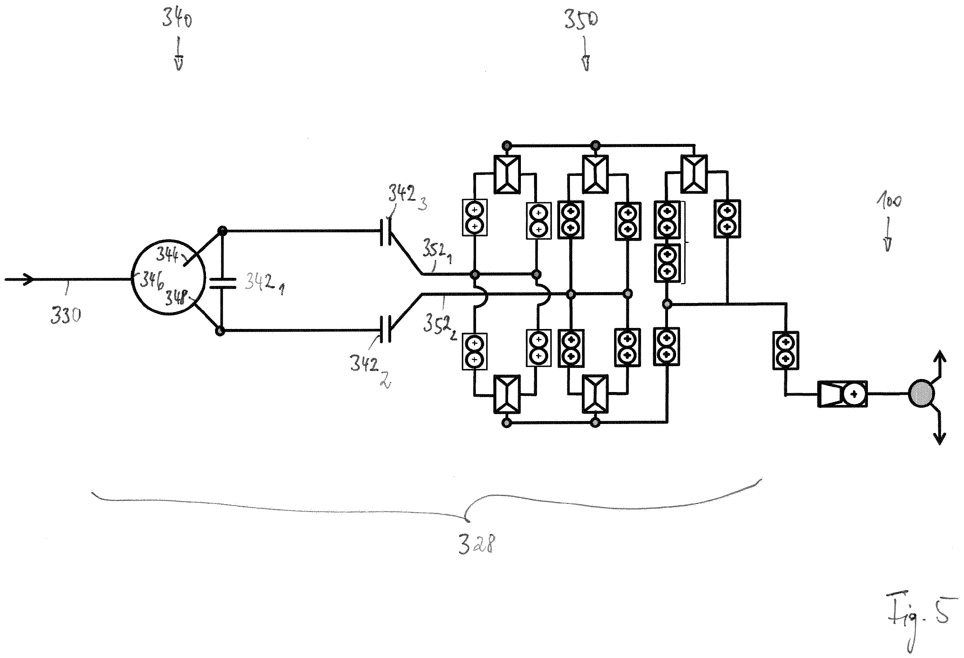

Die Figur 5 zeigt ein Blockschaltbild einer weiteren Ausführung der Getriebeanordnung, wobei nur die Abweichungen gegenüber der in der Figur 4 gezeigten Ausführung beschrieben werden und die Bezugszeichen ein weiteres Mal um den Zähler 100 hochgesetzt sind. Während die Schaltstelle 342₁ weiterhin zwischen der Differenzwelle 348 und der Differenzwelle 344 und die Schaltstelle 342₂ zwischen der Differenzwelle 348 und der zweiten Anschlusswelle 352₂ angeordnet sind, ist die Schaltstelle 342₃ hierbei zwischen der Differenzwelle 344 und der ersten Anschlusswelle 352₁ angeordnet.

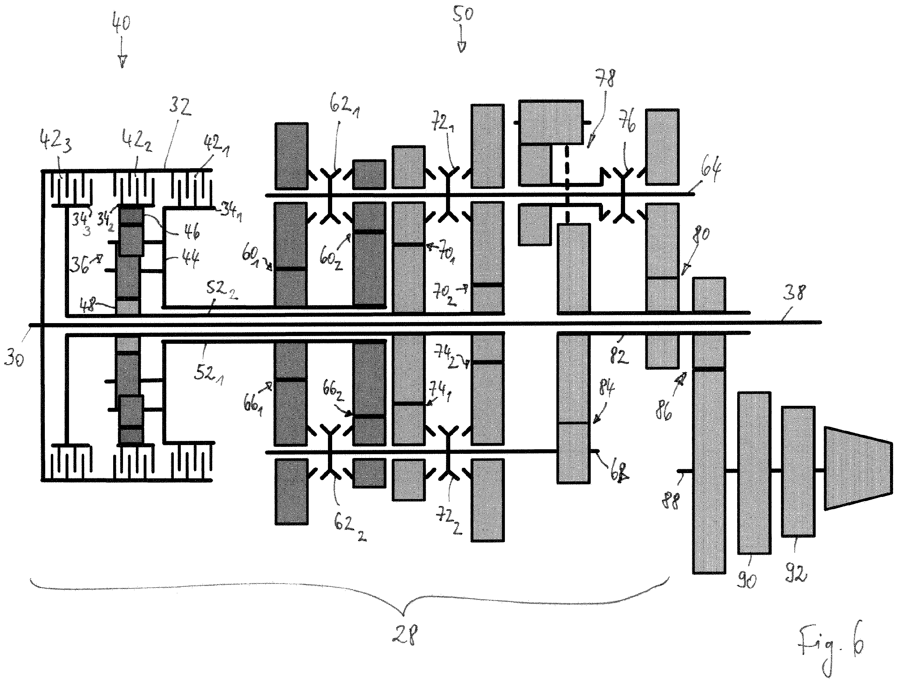

Die Figur 6 zeigt ein Radsatzlayout der im Zusammenhang mit der Figur 2 beschriebenen Ausführung der Getriebeanordnung 28. Zu erkennen ist zunächst, dass die Schaltstellen 42₁, 42₂, 42₃ als Lamellenkupplungen ausgeführt sein können. Die Lamellenkupplungen 42₁, 42₂, 42₃ haben einen gemeinsamen äußeren Kupplungskorb 32. Über die Kupplungsnabe 34₃ der Schaltstelle 42₃ wird das Sonnenrad 48 des Umlaufgetriebes 40 und die zweite Anschlusswelle 52₂ des Hauptschaltgetriebes 50 angetrieben. Über die Kupplungsnabe 34₂ der Schaltstelle 42₂ wird das Hohlrad 46 des Umlaufgetriebes 40 angetrieben. Über die Kupplungsnabe 34₁ der Schaltstelle 42₁ wird der Planetenradträger 44 und die erste Anschlusswelle 52₁ des Hauptschaltgetriebes 50 angetrieben. Das Umlaufgetriebe 40 kann als Doppelplanetengetriebe mit Doppelplanetenrädern 36 ausgeführt sein. Die zweite Anschlusswelle 52₂ kann innerhalb der ersten Anschlusswelle 52₁ angeordnet sein. Weiterhin kann innerhalb der Anschlusswellen 52₁, 52₂ eine unmittelbar von dem Antriebsmotor 22 - siehe Figur 1 - angetriebene Nebenabtriebswelle 38 angeordnet sein und beispielsweise dafür vorgesehen sein, eine - nicht näher dargestellte - Zapfwelle des Fahrzeugs 10 anzutreiben. Bezüglich des Hauptschaltgetriebes 50 an sich wird auf die Beschreibung zu Figur 2 verwiesen. Figur 6 zeigt weiterhin, dass der Abtriebswelle 88 ein erstes Abtriebszahnrad 90 und eine zweites Abtriebszahnrad 92 zugeordnet sein können. Das erste Abtriebszahnrad 90 kann Teil eines bedarfsweise zuschaltbaren Vorderradantriebs sein und das zweite Abtriebszahnrad 92 kann Teil einer Parksperre des Fahrzeugs 10 sein.

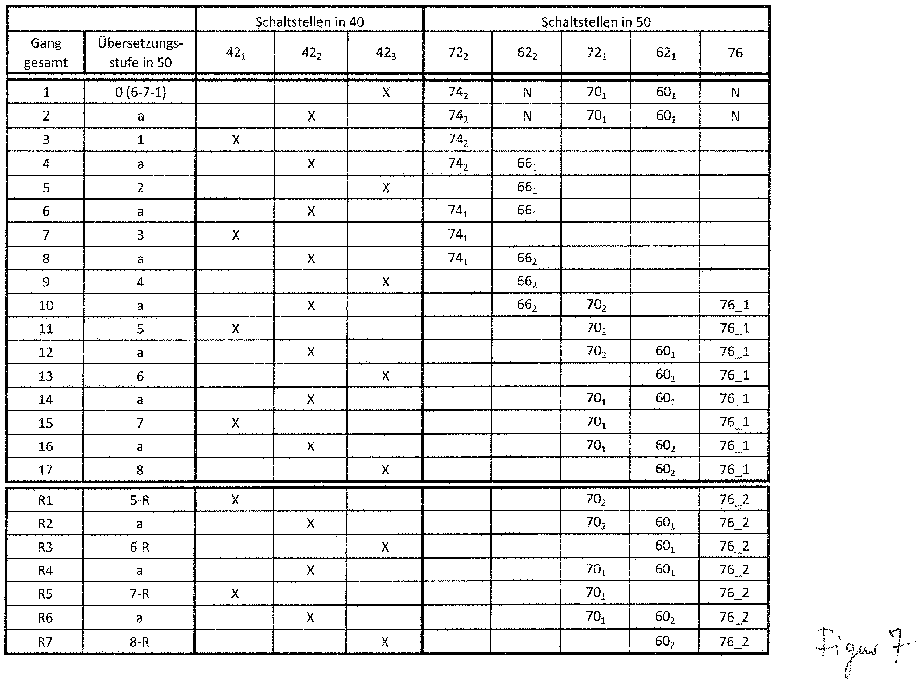

Die Figur 7 zeigt eine Schaltmatrix der in den Figuren 2 bis 4 beschriebenen Ausführungsformen der Getriebeanordnung. Die Schaltmatrix nummeriert zunächst in der äußerst linken Spalte "Gang gesamt" die Gangstufen der Getriebeanordnung 28, die sich durch das Zusammenspiel der jeweiligen Übersetzungsstufe des Umlaufgetriebes 40 und des Hauptschaltgetriebes 50 ergeben. In der von links gesehen zweiten Spalte "Übersetzungsstufe in 50" sind die aus den Übersetzungsstufen resultierenden Schaltzustände des Hauptschaltgetriebes 50 aufgeführt. In den daran sich rechts anschließenden Spalten sind die Schaltzustände der Schaltstellen des Umlaufgetriebes 40 und des Hauptschaltgetriebes 50 angegeben. Die Markierung "X" bedeutet, dass ein Leistungsfluss übertragen wird und die Markierung "N" bedeutet, dass kein Leistungsfluss übertragen wird. Weiterhin bezeichnen die Nummerierungen mit den tiefgestellten Indizes - z.B. 74₂ - diejenige Stirnradstufe des Hauptschaltgetriebes 50, über die durch die entsprechende Schaltstelle der Leistungsfluss übertragen wird.

In der Spalte "Übersetzungsstufe in 50" findet sich in jeder zweiten Zeile eine Nummerierung, nämlich 0 bis 8. In den Zeilen dazwischen ist ein "a" eingetragen. Während die mit 0 bis 8 bezeichneten Übersetzungsstufen sogenannte direkte Gänge sind, die ohne eine Übersetzung in dem Umlaufgetriebe 40 zustande kommen, sind mit "a" sogenannte Zwischengänge bezeichnet, die durch Überlagerung einer Übersetzung des Hauptschaltgetriebes 50 mit einer Übersetzung des Umlaufgetriebes 40 zustande kommen. Der Spalte "Schaltstellen in 40" ist zu entnehmen, dass in jedem Gang lediglich eine der drei Schaltstellen 42₁, 42₂, 42₃ zu einer Zeit geschlossen ist und einen Leistungsfluss überträgt. Weiterhin ist der Spalte "Übersetzungsstufe in 50" zu entnehmen, dass unterhalb der Übersetzungsstufe 1 ein Zwischengang a und die Übersetzungsstufe 0 angeordnet ist. Hierbei handelt es, ausgehend von der Übersetzungsstufe 1, um ins Langsame übersetzte Gänge.

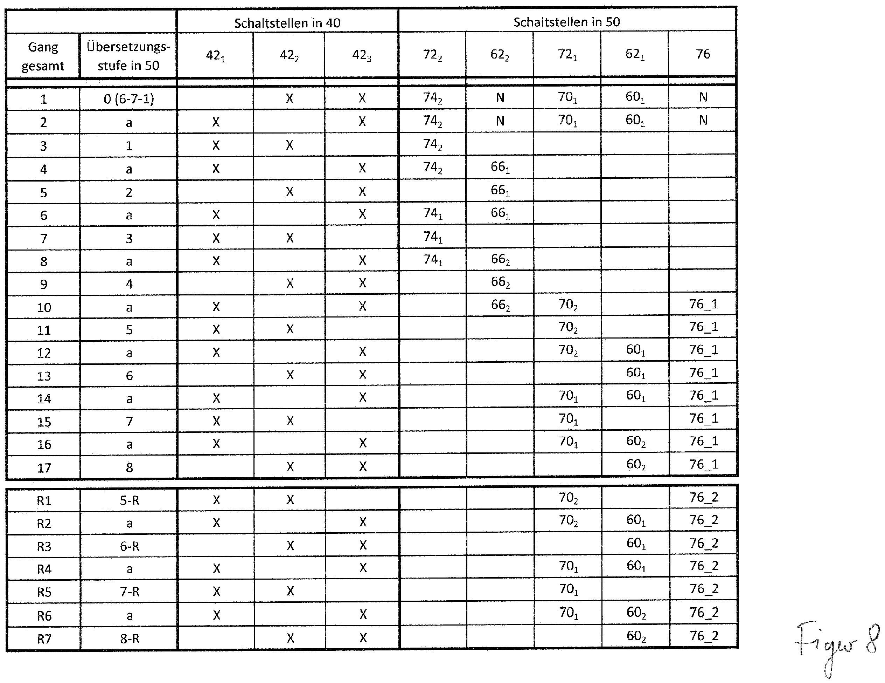

Die Figur 8 zeigt eine Schaltmatrix der in der Figur 5 beschriebenen Ausführungsform der Getriebeanordnung. Der einzige Unterschied zu der in der Figur 7 gezeigten Schaltmatrix besteht darin, dass hier zeitgleich zwei der Schaltstellen 42₁,42₂, 42₃ des Umlaufgetriebes 40 geschlossen sind, um einen Leistungsfluss zu übertragen. Im Übrigen wird auf die Beschreibung zu der in Figur 7 gezeigten Schaltmatrix verwiesen.

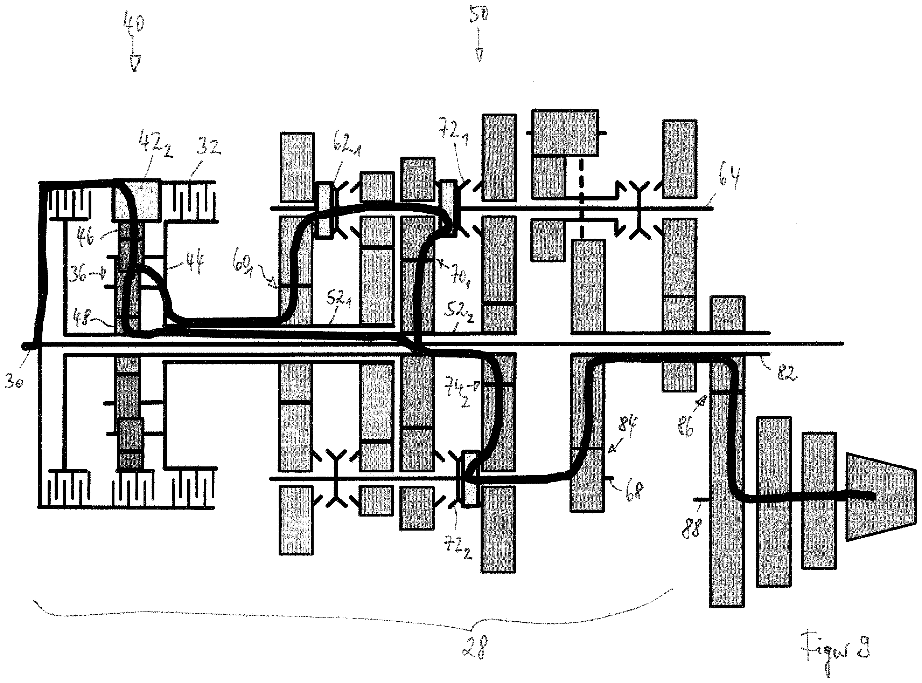

Die Figur 9 zeigt einen in das Radsatzlayout eingezeichneten Leistungsfluss der in den Figuren 2 bis 4 beschriebenen Ausführungsformen der Getriebeanordnung, deren Schaltmatrix in der Figur 7 dargestellt ist. Die Figur 9 zeigt den in der Schaltmatrix in der Spalte "Gang gesamt" aufgeführten Gang 2. Bei Gang 2 handelt es sich um einen Zwischengang, der durch eine Übersetzung sowohl im Umlaufgetriebe 40 als auch im Hauptschaltgetriebe 50 zustande kommt. Der Leistungsfluss verläuft ausgehend von der Eingangswelle 30 über die Schaltstelle 42₂ in das Umlaufgetriebe 40. In dem Umlaufgetriebe 40 verzweigt sich der Leistungsfluss in zwei parallele Leistungspfade, wobei ein erster Leistungspfad über den Planetenradträger 44 auf die erste Anschlusswelle 52₁ und ein zweiter Leistungspfad über das Sonnenrad 48 auf die zweite Anschlusswelle 52₂ verläuft. Während der erste Leistungspfad von der ersten Anschlusswelle 52₁ über die Stirnradstufe 60₁, die erste Vorgelegewelle 64 und die Stirnradstufe 70₁ auf die zweite Anschlusswelle 52₂ verläuft, verbleibt der zweite Leistungspfad 52₂ auf der zweiten Anschlusswelle 52₂, um sich dort mit dem ersten Leistungspfad erneut zu einem Leistungspfad zu verbinden. Dieser eine Leistungspfad verläuft dann weiter über die Stirnradstufe 74₂ auf die zweite Vorgelegewelle 68, weiter über die Stirnradstufe 84 auf die Ausgangswelle 82. Zusammenfassend kann gesagt werden, dass der Leistungsfluss in dem Gang 2 der Getriebeanordnung 28 sowohl eine Leistungsverzweigung in mehrere Leistungspfade, als auch eine Windung durch das Hauptschaltgetriebe 50 erfährt. Hierbei soll unter Windung ein Verlauf des Leistungsflusses verstanden werden, der ausgehend von einer der Anschlusswellen über zwei Stirnradstufen auf die jeweils andere Anschlusswelle verläuft.

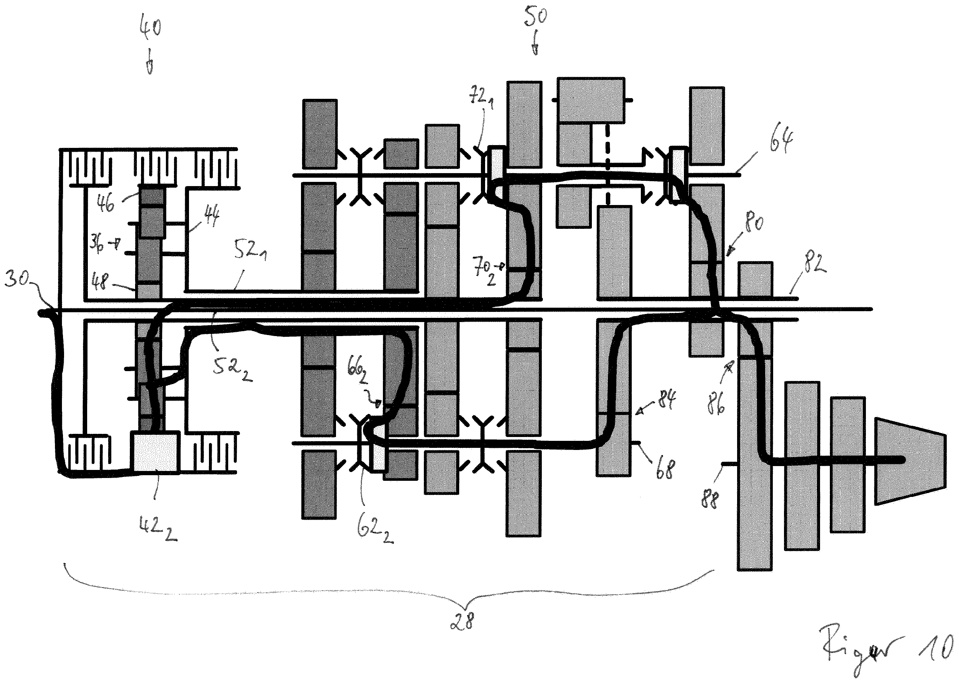

Die Figur 10 zeigt den in der Schaltmatrix in der Spalte "Gang gesamt" aufgeführten Gang 10. Bei Gang 10 handelt es sich um einen Zwischengang, der durch eine Übersetzung sowohl im Umlaufgetriebe 40 als auch im Hauptschaltgetriebe 50 zustande kommt. Der Leistungsfluss verläuft ausgehend von der Eingangswelle 30 über die Schaltstelle 42₂ in das Umlaufgetriebe 40. In dem Umlaufgetriebe 40 verzweigt sich der Leistungsfluss in zwei parallele Leistungspfade, wobei ein erster Leistungspfad über den Planetenradträger 44 auf die erste Anschlusswelle 52₁ und ein zweiter Leistungspfad über das Sonnenrad 48 auf die zweite Anschlusswelle 52₂ verläuft. Von der ersten Anschlusswelle 52₁ verläuft der Leistungsfluss über die Stirnradstufe 66₂ und die Schaltstelle 62₂ auf die Vorgelegewelle 68. Von der zweiten Anschlusswelle 52₂ verläuft der Leistungsfluss über die Stirnradstufe 70₂ und die Schaltstelle 72₁ auf die Vorgelegewelle 64. Von den Vorgelegewellen 64, 68 verlaufen die beiden Leistungsflüsse einerseits über die Stirnradstufe 80 und andererseits über die Stirnradstufe 84 auf die Ausgangswelle 82, wo sich die beiden Leistungsflüssen erneut zu einem Leistungsfluss vereinen. Zusammenfassend kann gesagt werden, dass der Leistungsfluss in dem Gang 10 der Getriebeanordnung 28 eine Leistungsverzweigung in dem Umlaufgetriebe 40 erfährt und sich hiermit mehrere Leistungspfade durch das Hauptschaltgetriebe 50 ergeben.

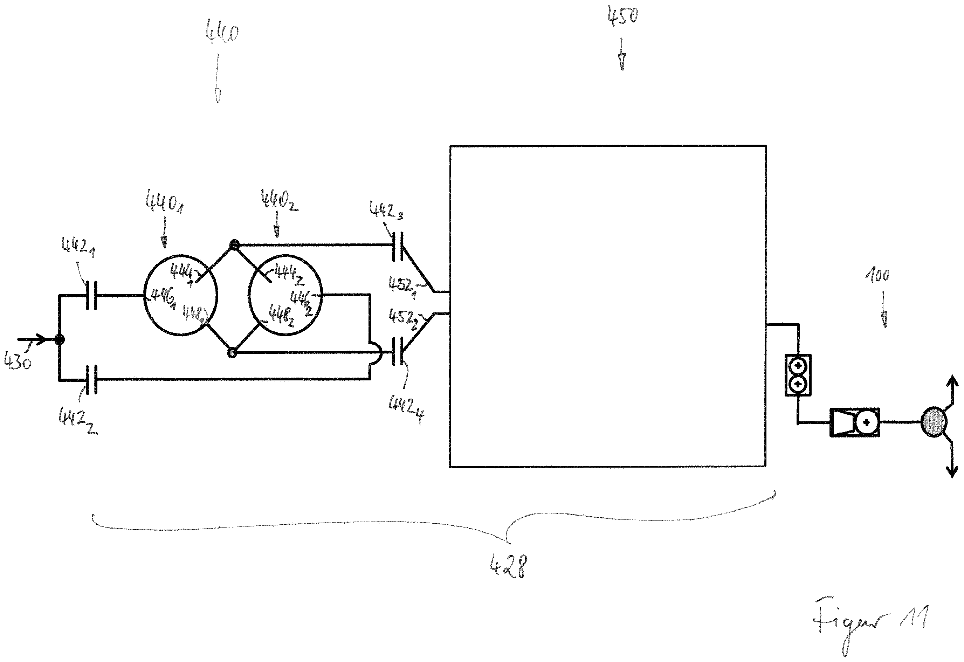

Die Figur 11 zeigt ein Blockschaltbild einer erfindungsgemäßen Getriebeanordnung 428 in einer weiteren Ausführungsform, wobei nur die Abweichungen gegenüber der in den Figuren 2 bis 5 gezeigten Ausführungen beschrieben werden und die Bezugszeichen ein weiteres Mal um den Zähler 100 hochgesetzt sind. Die in der Figur 11 gezeigte Getriebeanordnung 428 unterscheidet sich von den in den Figuren 2 bis 5 gezeigten Anordnungen durch ein Umlaufgetriebe, das zwei ineinander integrierte Planetenradgetriebe 440₁, 440₂ umfasst. Im Übrigen hat das Hauptschaltgetriebe 450 keine Veränderung erfahren. Ausgehend von der Eingangswelle 430 kann über die Schaltstelle 442₁ die Summenwelle 446₁ - welche als Hohlrad ausgebildet sein kann - des Planetenradgetriebes 440₁ und über die Schaltstelle 442₂ die Summenwelle 446₂ - welche als Sonnenrad ausgebildet sein kann - des Planetenradgetriebes 440₂ angetrieben werden. Die beiden Planetenradgetriebe 440₁, 440₂ sind untereinander derart verbunden, dass die ersten Differenzwellen 444₁, 444₂ - welche als Planetenradträger ausgebildet sein können - jeweils miteinander und die zweiten Differenzwellen 448₁, 448₂ - welche als Sonnenräder ausgebildet sein können - jeweils miteinander verbunden sind. Ausgehend von den ersten Differenzwellen 444₁, 444₂ kann ein Leistungsfluss über die Schaltstelle 442₃ auf die erste Anschlusswelle 452₁ übertragen werden. Ausgehend von den zweiten Differenzwellen 448₁, 448₂ kann ein Leistungsfluss über eine weitere Schaltstelle 442₄ auf die zweite Anschlusswelle 452₂ übertragen werden. Zusammenfassend kann gesagt werden, dass sich die in der Figur 11 beschriebene Ausführungsform der Getriebeanordnung 428 durch eine Umlaufgetriebe 440 mit zwei Planetenradgetrieben 440₁, 440₂ und vier Schaltstellen 442₁, 442₂, 442₃, 442₄ auszeichnet. In einer vereinfachten aber alternativen Variante kann auf die dritte und vierte Schaltstelle 442₃, 442₄ auf Kosten einer Lastschaltbarkeit verzichtet werden.

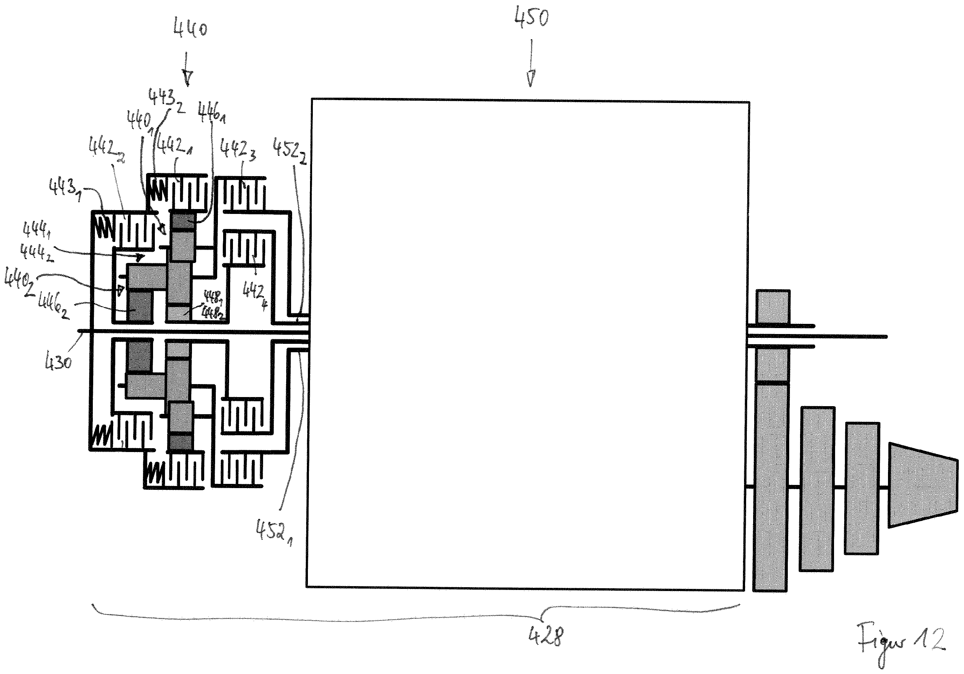

Die Figur 12 zeigt ein Radsatzlayout der im Zusammenhang mit der Figur 11 beschriebenen Ausführung der Getriebeanordnung 428. Zu erkennen ist zunächst, dass die Schaltstellen 42₁, 42₂, 42₃, 43₄ als Lamellenkupplungen ausgeführt sein können. Zu erkennen ist, dass den beiden Schaltstellen 442₁, 442₂ jeweils eine Druckfeder 443₁, 443₂ zugeordnet ist, die die Schaltstellen 442₁, 442₂ in eine geschlossene Schaltstellung beaufschlagen. Dies bedeutet, dass die Schaltstellen 442₁, 442₂ bei Aktuierung, beispielsweise mittels hydraulischen Drucks, einen Leistungsfluss unterbrechen, ansonsten der Leistungsfluss übertragen wird.

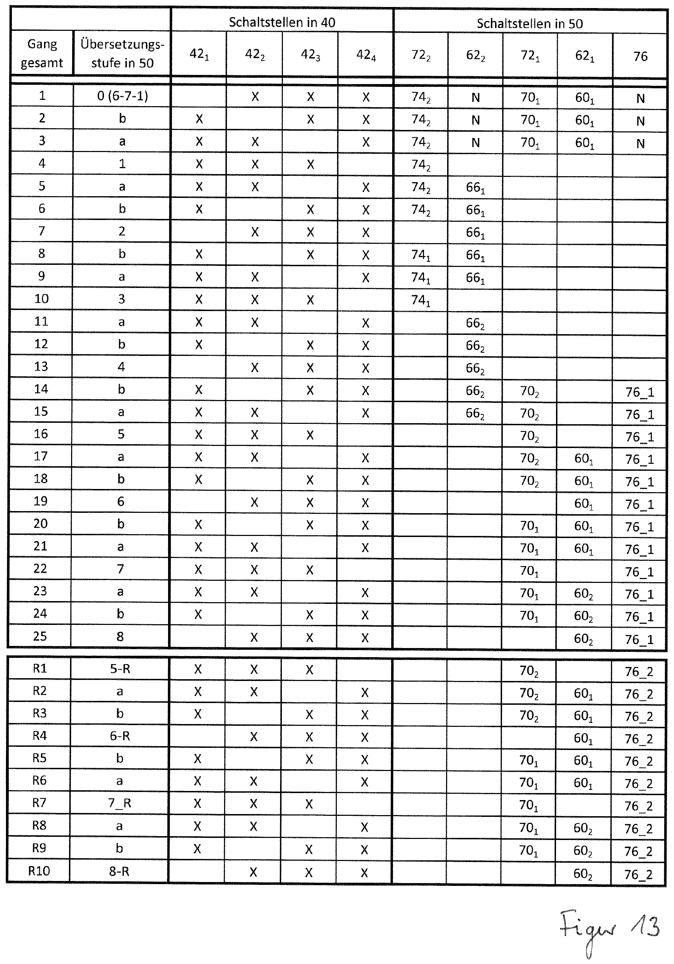

Die Figur 13 zeigt eine Schaltmatrix der in der Figur 11 beschriebenen Ausführungsform der Getriebeanordnung 428. Der strukturelle Aufbau der Schaltmatrix in der Figur 13 ist gleich dem Aufbau der Schaltmatrizen in den Figuren 7 und 8, insofern auf deren Beschreibung verwiesen wird und an dieser Stelle lediglich die Unterschiede beschrieben werden. Die Schaltmatrix in der Figur 13 zeigt in der Spalte "Übersetzungsstufe in 50" in jeder dritten Zeile eine Nummerierung, nämlich 0 bis 8. In den Zeilen dazwischen ist ein "a" oder ein "b" eingetragen. Während die mit 0 bis 8 bezeichneten Übersetzungsstufen sogenannte direkte Gänge sind, die ohne eine Übersetzung in dem Umlaufgetriebe 40 zustande kommen, sind mit "a" und "b" sogenannte Zwischengänge bezeichnet, die durch Überlagerung einer Übersetzung des Hauptschaltgetriebes 50 mit einer Übersetzung des Umlaufgetriebes 40 zustande kommen. Der Spalte "Schaltstellen in 40" ist zu entnehmen, dass in jedem Gang drei der vier Schaltstellen 42₁, 42₂, 42₃, 42₄ zu einer Zeit geschlossen sind und einen Leistungsfluss übertragen. Weiterhin ist der Spalte "Übersetzungsstufe in 50" zu entnehmen, dass unterhalb der Übersetzungsstufe 1 ein Zwischengang a, ein Zwischengang b und die Übersetzungsstufe 0 angeordnet sind. Hierbei handelt es sich, ausgehend von der Übersetzungsstufe 1, um ins Langsame übersetzte Gänge.

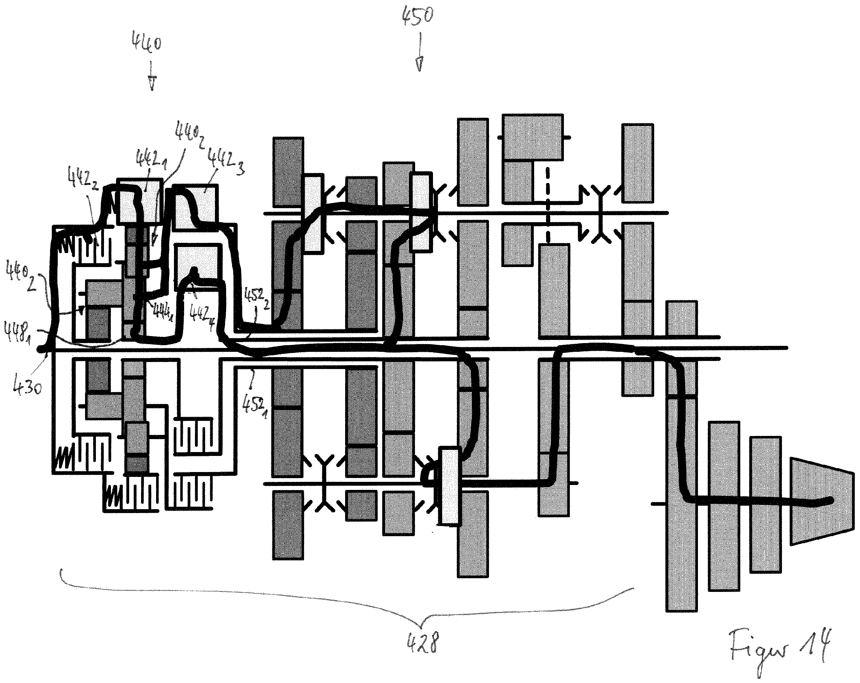

Die Figur 14 zeigt den Leistungsfluss der in der Figur 11 beschriebenen Ausführungsform der Getriebeanordnung 428, deren Schaltmatrix in der Figur 13 dargestellt ist. Die Figur 9 zeigt den in der Schaltmatrix in der Spalte "Gang gesamt" aufgeführten Gang 2. Bei Gang 2 handelt es sich um einen Zwischengang, der durch eine Übersetzung sowohl im Umlaufgetriebe 440 als auch im Hauptschaltgetriebe 450 zustande kommt. Der Leistungsfluss verläuft ausgehend von Eingangswelle 430 über die geschlossene Schaltstelle 442₁ in das Planetenradgetriebe 440₁. Da die Schaltstelle 442₂ geöffnet ist, wird über diese kein Leistungsfluss in das Planetenradgetriebe 440₂ übertragen. In dem Planetenradgetriebe 440₁ verzweigt sich der Leistungsfluss, wobei ein Leistungspfad über eine der ersten Differenzwellen 444₁ und ein weiterer Leistungspfad über eine der zweiten Differenzwellen 448₁ verlaufen. Bezüglich des weiteren Verlaufs des Leistungsflusses innerhalb des Hauptschaltgetriebes 450 und die Zusammenführung der beiden Leistungspfade wird auf die Figur 9 verwiesen. Zusammenfassend kann gesagt werden, dass der Leistungsfluss in dem Gang 2 der Getriebeanordnung 428 sowohl eine Leistungsverzweigung in mehrere Leistungspfade, als auch eine Windung durch das Hauptschaltgetriebe 450 erfährt.

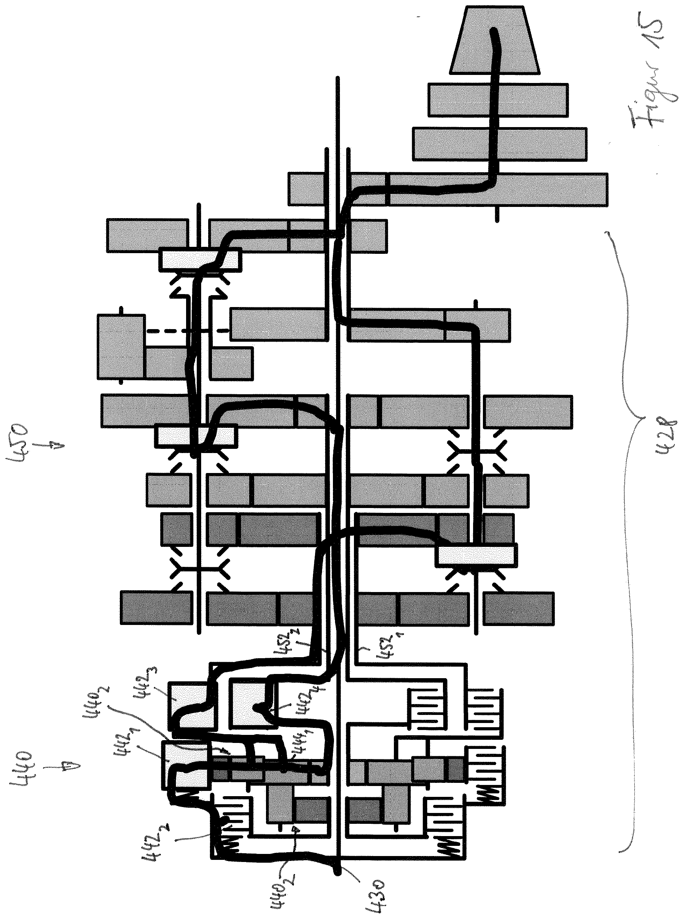

Die Figur 15 zeigt den in der Schaltmatrix der Figur 13 in der Spalte "Gang gesamt" aufgeführten Gang 14. Bei Gang 14 handelt es sich um einen Zwischengang, der durch eine Übersetzung sowohl im Umlaufgetriebe 440 als auch im Hauptschaltgetriebe 450 zustande kommt. Bezüglich des Leistungsflusses innerhalb des Umlaufgetriebes 440 wird auf die Beschreibung zu der Figur 14 verwiesen und bezüglich des Leistungsflusses innerhalb des Hauptschaltgetriebes 450 und die Zusammenführung der beiden Leistungspfade wird auf die Figur 10 verwiesen. Zusammenfassend kann gesagt werden, dass der Leistungsfluss in dem Gang 14 der Getriebeanordnung 428 eine Leistungsverzweigung in dem Umlaufgetriebe 440 erfährt und sich hiermit mehrere Leistungspfade durch das Hauptschaltgetriebe 450 ergeben.

### Bezugszeichenliste

- 10: Fahrzeug
- 12: Kabine
- 14: vordere Fahrzeugachse
- 20: Antriebsstrang
- 22: Antriebsmotor
- 24: Fahrantrieb
- 26: hintere Fahrzeugachse
- 28: Getriebeanordnung
- 30: Eingangswelle
- 32: Kupplungskorb
- 34: Kupplungsnabe
- 36: Doppelplanetenrad
- 38: Nebenabtriebswelle
- 40: Umlaufgetriebe
- 42: Schaltstelle
- 44: Planetenradträger
- 46: Hohlrad
- 48: Sonnenrad
- 50: Hauptschaltgetriebe
- 52: Anschlusswelle
- 60: Stirn radstufe
- 62: Schaltstelle
- 64: Vorgelegewelle
- 66: Stirnradstufe
- 68: Vorgelegewelle
- 70: Stirnradstufe
- 72: Schaltstelle
- 74: Stirnradstufe
- 76: Schaltstelle
- 78: Stirnradstufe
- 80: Stirnradstufe
- 82: Ausgangswelle
- 84: Stirnradstufe
- 86: Stirnradstufe
- 88: Abtriebswelle
- 90: Abtriebszahnrad
- 92: Abtriebszahnrad
- 100: Achsgetriebe

## Patentansprüche

1. Getriebeanordnung (28) für einen Antriebsstrang (20) eines Fahrzeugs (10), um einen Antriebsmotor (22) mit einem Fahrantrieb (24) des Fahrzeugs zu verbinden, umfassend
ein Hauptschaltgetriebe (50) mit mehreren Übersetzungsstufen (60, 66, 70, 74), wobei durch ein bedarfsweises Schalten mittels Schaltstellen (62, 72) einer oder mehrerer Übersetzungsstufen (60, 66, 70, 74) mehrere Schaltzustände des Hauptschaltgetriebes (50) schaltbar sind, wobei die Schaltstellen (62, 72) als formschlüssige Schaltstellen ausgeführt sind,
ein Umlaufgetriebe (40),
wobei das Hauptschaltgetriebe (50) und das Umlaufgetriebe (40) über zwei Anschlusswellen (52₁, 52₂) antriebsmäßig miteinander verbunden oder bedarfsweise verbindbar sind,
wobei in einem oder mehreren Schaltzuständen des Hauptschaltgetriebes (50) ein Leistungsfluss von dem Antriebsmotor (22) in mindestens einem Abschnitt der Getriebeanordnung (30) über mehrere verzweigte Leistungspfade zu dem Fahrantrieb (24) verläuft,
in mindestens einem Schaltzustand der Leistungsfluss in mindestens einem der verzweigten Leistungspfade über mindestens zwei Schaltstellen (62, 72) verläuft,
**dadurch gekennzeichnet, dass** in einem oder mehreren Schaltzuständen der Leistungsfluss in mindestens einem der verzweigten Leistungspfade von einer der Anschlusswellen (52₁, 52₂) auf die andere der Anschlusswellen (52₂, 52₁) verläuft.

2. Getriebeanordnung (28) nach Anspruch 1, **dadurch gekennzeichnet, dass** der Leistungsfluss von einer der Anschlusswellen (52₁, 52₂) über mindestens eine Übersetzungsstufe (60, 66, 70, 74) auf die andere der Anschlusswellen (52₂, 52₁) verläuft.

3. Getriebeanordnung (428) nach einem der Ansprüche 1 oder 2, **dadurch gekennzeichnet, dass** das Umlaufgetriebe (440) vier Anschlussschnittstellen umfasst, von denen die erste und die zweite Anschlussschnittstelle über jeweils eine Schaltstelle mit einer Eingangswelle (430) der Getriebeanordnung (428) nach Extern verbindbar sind und die dritte Anschlussschnittstelle mit einer der beiden Anschlusswellen (452₁, 452₂) des Hauptschaltgetriebes (450) und die vierte Anschlussschnittstelle mit der anderen der beiden Anschlusswelle (452₂, 452₁) des Hauptschaltgetriebes (450) verbunden oder bedarfsweise verbindbar ist.

4. Getriebeanordnung (428) nach Anspruch 3, **dadurch gekennzeichnet, dass** die dritte Anschlussschnittstelle über eine Schaltstelle (442₃) mit einer der beiden Anschlusswellen (452₁, 452₂) des Hauptschaltgetriebes (450) und die vierte Anschlussschnittstelle über eine Schaltstelle (442₄) mit der anderen der beiden Anschlusswellen (452₂, 452₁) des Hauptschaltgetriebes (450) verbindbar ist.

5. Getriebeanordnung (28) nach einem der Ansprüche 1 bis 4, **dadurch gekennzeichnet, dass** das Hauptschaltgetriebe (50) als Parallelschaltgetriebe ausgeführt ist.

6. Getriebeanordnung (28) nach Anspruch 5, **dadurch gekennzeichnet, dass** das Hauptschaltgetriebe (50) in Vorgelegebauweise mit zwei Vorgelegewellen (64, 68) ausgeführt ist.

## Claims

1. Transmission assembly (28) for a drive train (20) of a vehicle (10) in order to connect a drive motor (22) to a traction drive (24) of the vehicle, comprising
a main shift transmission (50) having a plurality of transmission stages (60, 66, 70, 74), wherein a plurality of shift states of the main shift transmission (50) can be selected by an as-required shifting by means of shifting points (62, 72) of one or more transmission stages (60, 66, 70, 74), wherein the shifting points (62, 72) are configured as positively engaging shifting points,
an epicyclic transmission (40),
wherein the main shift transmission (50) and the epicyclic transmission (40) are drive-connected to one another, or can be drive-connected as required, via two connection shafts (52₁, 52₂), wherein, in one or more shift states of the main shift transmission (50), a power flow runs from the drive motor (22) in at least one portion of the transmission assembly (30) via a plurality of branched power paths to the traction drive (24),
in at least one shift state, the power flow runs in at least one of the branched power paths via at least two shifting points (62, 72),
**characterized in that**, in one or more shift states, the power flow runs in at least one of the branched power paths from one of the connection shafts (52₁, 52₂) to the other of the connection shafts (52₂, 52₁).

2. Transmission assembly (28) according to Claim 1, **characterized in that** the power flow runs from one of the connection shafts (52₁, 52₂) via at least one transmission stage (60, 66, 70, 74) to the other of the connection shafts (52₂, 52₁) .

3. Transmission assembly (428) according to either of Claims 1 and 2, **characterized in that** the epicyclic transmission (440) comprises four connection interfaces, of which the first and second connection interface can be connected externally via a shifting point, respectively, to an input shaft (430) of the transmission assembly (428), and the third connection interface is connected, or can be connected as required, to one of the two connection shafts (452₁, 452₂) of the main shift transmission (450), and the fourth connection interface is connected, or can be connected as required, to the other of the two connection shafts (452₂, 452₁) of the main shift transmission (450).

4. Transmission assembly (428) according to Claim 3, **characterized in that** the third connection interface can be connected via a shifting point (442₃) to one of the two connection shafts (452₁, 452₂) of the main shift transmission (450), and the fourth connection interface can be connected via a shifting point (442₄) to the other of the two connection shafts (452₂, 452₁) of the main shift transmission (450) .

5. Transmission assembly (28) according to one of Claims 1 to 4, **characterized in that** the main shift transmission (50) is configured as a parallel shift transmission.

6. Transmission assembly (28) according to Claim 5, **characterized in that** the main shift transmission (50) is configured in a countershaft design with two countershafts (64, 68).

## Revendications

1. Dispositif de transmission (28) pour un groupe motopropulseur (20) d'un véhicule à moteur (10), destiné à raccorder un moteur d'entraînement (22) avec une traction (24) du véhicule, comprenant
une boîte de vitesses principale (50) dotée de plusieurs étages de transmission (60, 66, 70, 74), dans lequel plusieurs états de fonctionnement de la boîte de vitesses principale (50) sont commutables par une commutation sur demande au moyen de points de commutation (62, 72) d'un ou plusieurs étages de transmission (60, 66, 70, 74), dans lequel les points de commutation (62, 72) sont réalisés comme points de commutation par complémentarité de forme,
une transmission planétaire (40),
dans lequel la boîte de vitesses principale (50) et la transmission planétaire (40) sont cinématiquement reliées l'une à l'autre ou peuvent l'être sur demande par le biais de deux arbres de raccordement (52₁, 52₂),
dans lequel, dans un ou plusieurs états de fonctionnement de la boîte de vitesses principale (50), un flux de puissance passe du moteur d'entraînement (22) à la traction (24) dans au moins une partie de dispositif de transmission (30) par le biais de plusieurs chemins de puissance ramifiés,
dans au moins un état de fonctionnement le flux de puissance passe dans au moins un des chemins de puissance ramifiés par le biais d'au moins deux points de commutation (62, 72),
**caractérisé en ce que** dans un ou plusieurs états de fonctionnement le flux de puissance passe dans au moins un des chemins de puissance ramifiés de l'un des deux arbres de raccordement (52₁, 52₂) à l'autre arbre de raccordement (52₂, 52₁).

2. Dispositif de transmission (28) selon la revendication 1, **caractérisé en ce que** le flux de puissance passe de l'un des deux arbres de raccordement (52₁, 52₂) à l'autre arbre de raccordement (52₂, 52₁) par le biais d'au moins un étage de transmission (60, 66, 70, 74) .

3. Dispositif de transmission (428) selon l'une des revendications 1 ou 2, **caractérisé en ce que** la transmission planétaire (440) comporte quatre interfaces de raccordement, depuis lesquelles la première et la deuxième interface de raccordement peuvent être reliées vers l'extérieur à un arbre d'entrée (430) du dispositif de transmission (428) respectivement par le biais d'un point de commutation et la troisième interface de raccordement est reliée ou peut l'être sur demande à un des deux arbres de raccordement (452₁, 452₂) de la boîte de vitesses principale (450) et la quatrième interface de raccordement est reliée ou peut l'être sur demande à l'autre arbre de raccordement (452₂, 452₁) de la boîte de vitesses principale (450).

4. Dispositif de transmission (428) selon la revendication 3, **caractérisé en ce que** la troisième interface de raccordement peut être reliée à un des deux arbres de raccordement (452₁, 452₂) de la boîte de vitesses principale (450) par le biais d'un point de commutation (442₃) et la quatrième interface de raccordement peut être reliée à l'autre arbre de raccordement (452₂, 452₁) de la boîte de vitesses principale (450) par le biais d'un point de commutation (442₄) .

5. Dispositif de transmission (28) selon l'une des revendications 1 à 4, **caractérisé en ce que** la boîte de vitesses principale (50) est réalisée comme boîte de vitesses parallèle.

6. Dispositif de transmission (28) selon la revendication 5, **caractérisé en ce que** la boîte de vitesses principale (50) est réalisée selon une configuration d'une transmission intermédiaire avec deux arbres intermédiaires (64, 68).
